# EUROPÄISCHE PATENTSCHRIFT

(11) **EP 2 080 150 B1**
(45) Veröffentlichungstag und Bekanntmachung des Hinweises auf die Patenterteilung: **18.05.2011**
(21) Anmeldenummer: 07803211.7
(22) Anmeldetag: 04.09.2007
(51) Int. Cl.: G06K 7/00, G06K 7/08

(54) **RFID-LESEGERÄT FÜR EIN DOKUMENT**
RFID READING DEVICE FOR A DOCUMENT
LECTEUR RFID POUR UN DOCUMENT

(30) Priorität: 29.09.2006 DE 102006046640
(43) Veröffentlichungstag der Anmeldung: 22.07.2009
(73) Patentinhaber: Bundesdruckerei GmbH, 10958 Berlin (DE)
(72) Erfinder: VONRÜTY, Mario, 10247 Berlin (DE); DÖRING, René, 13359 Berlin (DE); DRESSEL, Olaf, 14641 Wustermark (DE); HILL, Jan, 10179 Berlin (DE)
(74) Vertreter: Richardt Patentanwälte
(86) Internationale Anmeldenummer: PCT/EP2007/059247
(87) Internationale Veröffentlichungsnummer: WO 2008/040608

(56) Entgegenhaltungen:
- WO-A-03/040950
- US-A1- 2006 065 714

## Beschreibung

Die Erfindung betrifft ein RFID-Lesegerät für ein Dokument mit mindestens einem RFID-Chip sowie ein Verfahren zur Abstimmung der Antennenschwingkreise eines solchen RFID-Lesegeräts.

Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkarte, insbesondere als so genannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als RFID-Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Chip gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Chip angesprochen und ausgelesen werden kann, schwankt aufgrund der Ausführung (passiv / aktiv), dem benutzten Frequenzband, der Sendestärke und anderen Umwelteinflüssen zwischen ca. einem Zentimetern und mehr als einem Kilometer.

Hinsichtlich der Kommunikation über ein Nahfeld unterscheidet man zwischen "Proximity Coupling" (vgl. hierzu ISO 14443) und "Close Coupling" (vgl. hierzu ISO 10536). In beiden Fällen erfolgt das Auslesen des RFID-Chips induktiv über ein Nahfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing, oder werden in Papier, wie zum Beispiel in Wert- und Sicherheitsdokumenten, insbesondere Banknoten und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein aufschlagbares buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und - verfahren für kontaktlose Karten sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet. Schutzmechanismen zum Schutz gegen unbefugtes Auslesen der Daten aus einem solchen Dokument werden auch als "Basic Access Control" bezeichnet, und wurden von der International Civil Aviation Organisation (ICAO) standardisiert.

Darüber hinaus hat die ICAO bzw. die EU auch Verfahren zur so genannten Extended Access Control (EAC) und zur Active Authentication (AA) spezifiziert. Durch solche Verfahren soll das Auslesen von sensitiven Daten, die in dem RFID Chip des Dokuments gespeichert sind, besonders geschützt werden (EAC) bzw. die Authentizität des Chips im Pass nachgewiesen werden (AA). Insbesondere biometrische Daten, wie z.B. Fingerabdruckdaten, sollen so vor unberechtigten Zugriffen geschützt werden.

Aus dem Stand der Technik sind verschiedene Verfahren bekannt, Daten unter kryptographischem Schutz elektronisch zu speichern. Eine in den vergangenen zwei Jahrzehnten zu großer Verbreitung gelangte Form geschützter Speicher sind elektronische Chipkarten, die durch ISO 7816 Teil 1 bis 4 genormt sind. Zu den Anwendungsgebieten der Chipkartentechnologie gehören auch maschinenlesbare Reisedokumente (Machine Readable Travel Documents - MRTD).

Aus den zum Anmeldezeitpunkt unveröffentlichten DE 10 2005 025 806 und DE 10 2006 027 253 derselben Anmelderin, deren Offenbarungsgehalt durch Bezugnahme vollumfänglich in den Offenbarungsgehalt der vorliegenden Patentanmeldung aufgenommen wird, sind maschinenlesbare Dokumente bekannt, in denen durch eine in dem integrierten Schaltkreis des Dokuments gespeicherte Zuordnungstabelle für verschiedene in dem integrierten Schaltkreis gespeicherte Datenobjekte spezifiziert ist, welches kryptographische Protokoll zur Erfüllung einer Zugriffsbedingung zum externen Auslesen des betreffenden Datenobjekts erfüllt sein muss. Hierbei können auch asymmetrische kryptographische Protokolle zum Einsatz kommen, die ein Schlüsselpaar bestehend aus einem öffentlichen Schlüssel und einem privatem Schlüssel erfordern. Zur Durchführung des kryptographischen Protokolls wird zunächst optische eine Kennung von dem Dokument erfasst.

Aus der zum Anmeldezeitpunkt ebenfalls unveröffentlichten DE 10 2005 062 827 derselben Anmelderin, deren Offenbarungsgehalt durch Bezugnahme vollumfänglich in den Offenbarungsgehalt der vorliegenden Patentanmeldung aufgenommen wird, ist ein maschinenlesbares Dokument, insbesondere ein elektronischer Reisepass, bekannt, der mehrere RFID-Chips beinhaltet. Beispielsweise beinhaltet der elektronische Reisepass mehrere in den Reisepass eingeklebte Visa, wobei jedes Visum einen separaten RFID-Chip aufweist.

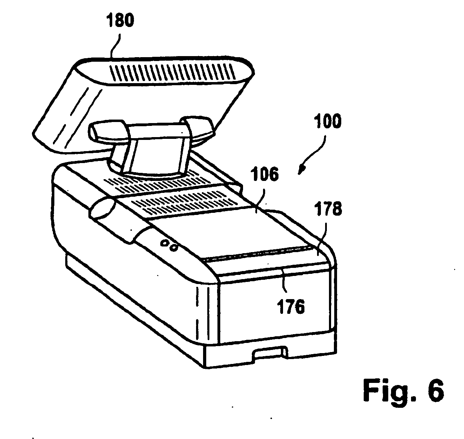

Aus der US 2006/0065714 A1 ist ein Lesegerät für einen Reisepass mit zwei Antennen bekannt (vgl. die dortige Figur 6). Hierbei besteht der Nachteil, dass es schwierig ist, die zur Versorgung der RFID Chips erforderliche Leistung abzustrahlen. Die Antennen werden so angesteuert, dass entgegengesetzte magnetische Felder erzeugt werden, die sich gegenseitig in einer Entfernung aufheben.

Der Erfindung liegt demgegenüber die Aufgabe zugrunde, ein verbessertes RFID-Lesegerät für ein Dokument zu schaffen sowie ein Verfahren zur Abstimmung der Antennenschwingkreise eines solchen RFID-Lesegeräts.

Die der Erfindung zugrunde liegenden Aufgaben sind jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein RFID-Lesegerät für ein Dokument mit mindestens einem RFID-Chip geschaffen. Bei dem Dokument kann es sich zum Beispiel um ein buchförmiges Dokument handeln, insbesondere um ein Wert- oder Sicherheitsdokument wie zum Beispiel einen maschinenlesbaren Reisepass, Personalausweis, Führerschein, Identifikationskarte, Visum, Kreditkarte, Kundenausweis, Fahrausweis, elektronischen Schlüssel, Berechtigungsnachweis oder dergleichen.

Nach einer Ausführungsform der Erfindung ist das RFID-Lesegerät für "aufschlagbare" Dokumente vorgesehen. Erfindungsgemäß werden insbesondere buchförmige, aufklappbare, aufschwenkbare oder sonst wie zu öffnende oder zwei- oder mehrteilige Dokumente als "aufschlagbare" Dokumente bezeichnet.

Das RFID-Lesegerät hat zwei Auflageflächen, die zum Auflegen des aufgeschlagenen Dokuments dienen. Unterhalb der Auflageflächen ist jeweils eine Antenne angeordnet. Dies hat den Vorteil, dass das erfindungsgemäße RFID-Lesegerät für unterschiedliche Arten von Dokumenten eingesetzt werden kann, bei denen sich der RFID-Chip an verschiedenen Stellen befinden kann. Die Auflageflächen können als eine einzige durchgehende Auflagefläche ausgebildet sein, die zwei Teilflächen für die Auflage von zwei Seiten des Dokuments aufweist. Die Auflageflächen können ferner so ausgebildet sein, dass das Dokument voll aufgeschlagen aufzulegen ist oder dass das Dokument mit einem gewissen von 180 Grad abweichendem Öffnungswinkel aufzulegen ist.

Besonders vorteilhaft ist die Erfindung, wenn die Auflageflächen einen von 180 Grad abweichenden Winkel einschließen, also keine Ebene bilden, so dass das Dokument in teilweise geöffnetem Zustand aufzulegen ist. Aufgrund der beiden Antennen erhält man für jede der Auflageflächen eine in etwa homogene Feldverteilung.

Beispielsweise kann mit einem erfindungsgemäßen RFID-Lesegerät ein Dokument gelesen werden, dessen RFID-Chip in der Vorderseite des Dokuments integriert ist. Dies ist beispielsweise bei dem elektronischen Reisepass der Bundesrepublik Deutschland der Fall, in dessen vorderen Einbanddeckel ein RFID-Chip integriert ist.

Der RFID-Chip kann aber auch in einer Rückseite des Dokuments integriert sein, wie zum Beispiel in dem hinteren Einbanddeckel eines elektronischen Reisepasses. Alternativ oder zusätzlich können auch ein oder mehrere RFID-Chips auf ein oder mehreren Innenseiten des Dokuments integriert sein, beispielsweise wenn in das Dokument verschiedene Teil-Dokumente, insbesondere Visa, eingeklebt sind.

Die Lage des oder der RFID-Chips eines Dokuments kann also je nach dem Aufbau des Dokuments unterschiedlich sein, d.h. es kann sich ein RFID-Chip nur auf der ersten Auflagefläche oder nur auf der zweiten Auflagefläche oder sowohl auf der ersten als auch der zweiten Auflagefläche befinden.

Ausführungsformen des erfindungsgemäßen RFID-Lesegeräts sind besonders vorteilhaft, da sie universell für verschiedene Dokumente einsetzbar sind, bei denen die RFID-Chips an verschiedenen Stellen angeordnet sind. Dies ist zum Beispiel besonders vorteilhaft für Passkontrollen, da in den Reisepässen unterschiedlicher Länder die RFID-Chips an unterschiedlichen Stellen angeordnet sein können.

Zum Teil haben Dokumente mit einem integrierten RFID-Chip auch eine Abschirmung, um ein unbefugtes Auslesen des RFID-Chips aus größere Entfernung zu verhindern. Beispielsweise ist eine Metallisierung in den vorderen Einbanddeckel eines Reisepasses integriert, wohingegen sich der RFID-Chip in dem hinteren Einbanddeckel befindet. Die Metallisierung dient zur elektromagnetischen Abschirmung des RFID-Chips, so dass dieser bei geschlossenem Dokument aufgrund seiner unmittelbaren Nähe zu der Metallisierung nicht gelesen werden kann. Das Dokument kann also nur in aufgeschlagenem Zustand durch ein RFID Verfahren gelesen werden, da sich nur dann der RFID-Chip hinreichend weit von der metallisierten Fläche des vorderen Einbanddeckels entfernt befindet. Ausführungsformen des erfindungsgemäßen RFID-Lesegeräts sind auch für solche Dokumente mit Abschirmung besonders geeignet, da zum Auflegen des Dokuments auf das RFID-Lesegerät dieses aufgeschlagen werden muss, so dass der RFID-Chip in den Bereich einer der Antennen kommt, welche von der metallisierten Fläche entfernt angeordnet ist. Ausführungsformen der vorliegenden Erfindung sind ferner besonders vorteilhaft, da es aufgrund der induktiven Kopplung zwischen den Antennenschwingkreisen nicht zur Ausbildung entgegengesetzer und sich gegenphasig auslöschender magnetischer Felder kommen kann. Dadurch kann sichergestellt werden, dass ein zu lesender RFID Chip ausreichend mit Energie versorgt wird.

Nach einer Ausführungsform der Erfindung schließen die Auflageflächen des RFID-Lesegeräts einen Winkel miteinander ein. Dieser ist vorzugsweise so gewählt, dass ein bequemes Auflegen des aufschlagbaren Dokuments möglich ist, ohne den Einband des Dokuments zu überdehnen. Beispielsweise beträgt der Winkel zwischen 10 und 170°, vorzugsweise ca. 75°.

Nach einer Ausführungsform der Erfindung gehören die Antennen des RFID-Lesegeräts zu unterschiedlichen Antennenschwingkreisen. Die beiden Antennenschwingkreise sind induktiv gekoppelt, wobei eine der beiden Antennenschwingkreise von einem Treiber angesteuert wird. Die Kopplung zwischen den Antennenschwingkreisen ist vorzugsweise kritisch, aber lose. Beispielsweise beträgt die Kopplung k zwischen 0,05 und 0,2, insbesondere zwischen 0,1 und 0,15.

Nach einer Ausführungsform der Erfindung sind beide Antennenschwingkreise auf dieselbe Resonanzfrequenz abgestimmt. Dies erfolgt beispielsweise so, dass zunächst der mit dem Treiber nicht galvanisch verbundene Antennenschwingkreis auf die Resonanzfrequenz abgestimmt wird, wobei der mit dem Treiber galvanisch verbundene Antennenschwingkreis aufgetrennt ist. Danach wird der mit dem Treiber galvanisch verbundene Antennenschwingkreis bei Kopplung mit dem zuerst abgestimmten Antennenschwingkreis auf dieselbe Resonanzfrequenz abgestimmt.

Beispielsweise erfolgt die Abstimmung auf eine Resonanzfrequenz eines Seitenbandes für die Übertragung von Kommandos und Daten. Beispielsweise ist dies bei einem ISO 14443 konformen RFID-Chip eine Resonanzfrequenz von ca. 14,3 MHz. Über die Mittenfrequenz von ca. 13,56 MHz kann die Versorgung des RFID-Chip mit elektrischer Energie erfolgen.

Nach einer Ausführungsform der Erfindung sind die Antennen spulenförmig ausgebildet. Beispielsweise besteht jede der Antennen aus einer oder mehreren Windungen, die in einem Randbereich der Auflageflächen verlaufen. Die Spulen können sich dabei überlappen oder sie können in einem Randbereich übereinander liegen. Beispielsweise können die Spulen auf einander gegenüberliegenden Seiten eines Substrats angeordnet sein.

Nach einer Ausführungsform der Erfindung hat das Substrat einen flexiblen Bereich. Aufgrund des flexiblen Bereichs ist das Substrat so biegbar, dass sich die Antennen in unterschiedlichen Ebenen befinden, die einen Winkel miteinander einschließen.

Nach einer Ausführungsform der Erfindung hat das RFID-Lesegerät einen optischen Sensor zum optischen Erfassen einer Kennung von dem Dokument. Die Erfassung der optischen Kennung kann eine Voraussetzung für das Auslesen einer Information aus dem RFID-Chip sein. Beispielsweise wird auf der Grundlage der optisch erfassten Kennung ein kryptographisches Protokoll durchgeführt. Erst nach erfolgreicher Durchführung des kryptographischen Protokolls ist ein Auslesen einer geschützten Information aus dem RFID-Chip möglich. Bei solchen geschützten Informationen kann sich um biometrische Daten, wie zum Beispiel Fingerabdruckdaten und/oder Iris-Scann-Daten handeln, die in dem RFID-Chip des Dokuments gespeichert sind.

Nach einer Ausführungsform der Erfindung hat das Substrat eine Öffnung, durch die hindurch die optische Erfassung der Kennung erfolgen kann. Auf diese Art und Weise kann dieselbe Auflagefläche des RFID-Lesegeräts je nach Lage des RFID-Chips entweder nur zur optischen Erfassung der Kennung oder sowohl zur optischen Erfassung der Kennung als auch zum Auslesen des RFID-Chips dienen.

Ausführungsformen der Erfindung sind besonders vorteilhaft für Dokumente, die neben zumindest einem RFID-Chip einen optisch sensierbaren maschinenlesbaren Bereich aufweisen, beispielsweise eine so genannte ICAO-Zeile, wie sie im unteren Bereich eines Reisepasses angeordnet ist. Durch den optisch lesbaren Bereich ist eine Basic Access Control realisiert, da Voraussetzung für das Auslesen des RFID-Chips zunächst die optische Erfassung der Kennung aus dem Bereich ist. Die optische Erfassung der Kennung sowie das Auslesen des RFID-Chips können mit einer Ausführungsform des erfindungsgemäßen RFID-Lesegeräts in einem Arbeitsgang erfolgen, ohne dass die Position des Dokuments relativ zu dem RFID-Lesegerät geändert werden muss. Dies wird insbesondere dadurch ermöglicht, dass das Substrat eine Öffnung haben kann, durch welche hindurch die optische Erfassung erfolgt.

Im Weiteren werden Ausführungsformen der Erfindung mit Bezugnahme auf die Zeichnungen näher erläutert. Es zeigen:
- Figur 1: ein schematisches Blockdiagramm einer Ausführungsform eines erfin- dungsgemäßen RFID-Lesegeräts mit einem aufgelegten Dokument,
- Figur 2: ein Blockdiagramm eines RFID-Chips des Dokuments,
- Figur 3: ein Prinzipschaltbild einer Ausführungsform der Antennenschwingkreise eines erfindungsgemäßen RFID-Lesegeräts,
- Figur 4: eine Draufsicht auf ein Substrat mit zwei gekoppelten Antennen einer Ausführungsform eines erfindungsgemäßen RFID-Lesegeräts,
- Figur 5: eine perspektivische Ansicht eines gebogenen Substrats einer Ausfüh- rungsform eines erfindungsgemäßen RFID-Lesegeräts,
- Figur 6: eine perspektivische Ansicht einer Ausführungsform eines erfindungs- gemäßen RFID-Lesegeräts mit einer Anzeigevorrichtung,
- Figur 7: ein Flussdiagramm einer Ausführungsform eines erfindungsgemäßen Verfahrens zur Abstimmung der Antennenschwingkreise.

Im Weiteren werden einander entsprechende Elemente der verschiedenen Ausführungsformen mit den gleichen Bezugszeichen gekennzeichnet.

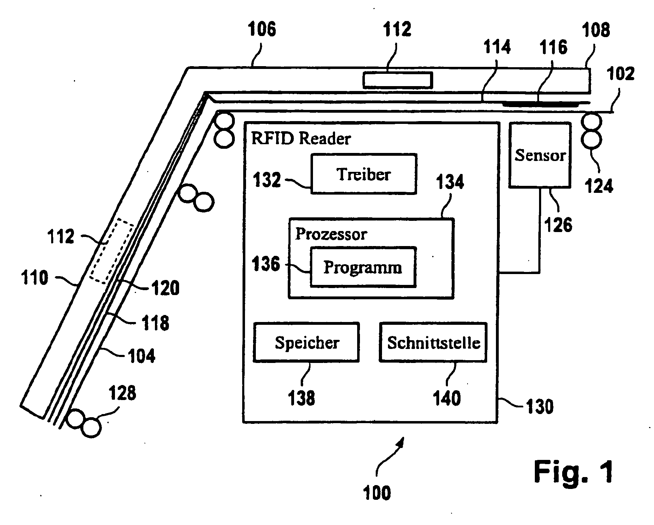

Die Figur 1 zeigt eine Ausführungsform eines erfindungsgemäßen RFID-Lesegeräts 100. Das RFID-Lesegerät 100 hat eine Auflagefläche 102 und eine Auflagefläche 104 für ein Dokument 106. Das Dokument 106 ist aufschlagbar.

Beispielsweise ist das Dokument 106 buchförmig ausgeführt. Insbesondere kann es sich bei dem Dokument 106 um einen maschinenlesbaren Reisepass handeln. Das Dokument 106 hat einen vorderen Einbanddeckel 108 und einen hinteren Einbanddeckel 110. Beispielsweise in den vorderen Einbanddeckel 108 ist ein RFID-Chip 112 integriert, wie es beispielsweise bei dem elektronischen Reisepass der Bundesrepublik Deutschland der Fall ist. In dem RFID-Chip 112 können schutzbedürftige Informationen gespeichert sein, wie zum Beispiel biometrische Daten, insbesondere Fingerabdruckdaten und/oder Iris-Scann-Daten des Trägers des Dokuments 106.

Der RFID-Chip 112 kann auch an einer anderen Stelle des Dokuments 106 integriert sein, wie zum Beispiel in dessen hinteren Einbanddeckel 110, wie durch die gestrichelten Linien dargestellt ist.

Bei der hier betrachteten Ausführungsform des Dokuments 106 besteht dessen erste Innenseite 114 aus einer Kunststoffkarte mit dem Passbild des Trägers des Dokuments 106 und persönlichen Angaben, wie zum Beispiel Name, Anschrift, Geburtsdatum und Größe im Klartext. Ferner beinhaltet die Innenseite 114 einen optisch lesbaren Bereich 116 mit einer optisch lesbaren Kennung. Beispielsweise handelt es sich bei dem optisch lesbaren Bereich 116 um die so genannte ICAO-Zeile.

Die optische Erfassung dieser Kennung durch das RFID-Lesegerät 100 ist eine Voraussetzung dafür, dass das RFID-Lesegerät 100 geschützte Informationen aus dem RFID-Chip 112 auslesen kann.

Das Dokument 106 kann weitere Innenseiten 118, 120, ... beinhalten. Die weiteren Innenseiten 120, ... bestehen beispielsweise aus Papier mit einem Sicherheitsaufdruck. Die Innenseiten 118, 120, ... können zum Eintrag von Vermerken und/oder zum Einkleben von Visa dienen. Solche eingeklebten Visa können ihrerseits jeweils einen weiteren RFID-Chip 112 mit Visum-Informationen beinhalten.

Das Dokument 106 kann ferner eine Abschirmung beinhalten, um ein unautorisiertes Auslesen des oder der RFID-Chips 112 zu verhindern. Wenn der RFID-Chip 112 beispielsweise in seiner in der Figur 1 gestrichelt dargestellten Position in dem hinteren Einbanddeckel 110 des Dokuments 106 angeordnet ist, so kann das Dokument 106 an oder in seinem vorderen Einbanddeckel 108 oder der Innenseite 114 eine Metallisierung aufweisen, so dass ein Auslesen des RFID-Chips 112 nicht möglich ist, so lange das Dokument 106 geschlossen ist, da sich dann der RFID-Chip 112 in unmittelbarer Nähe zu der Metallisierung befindet.

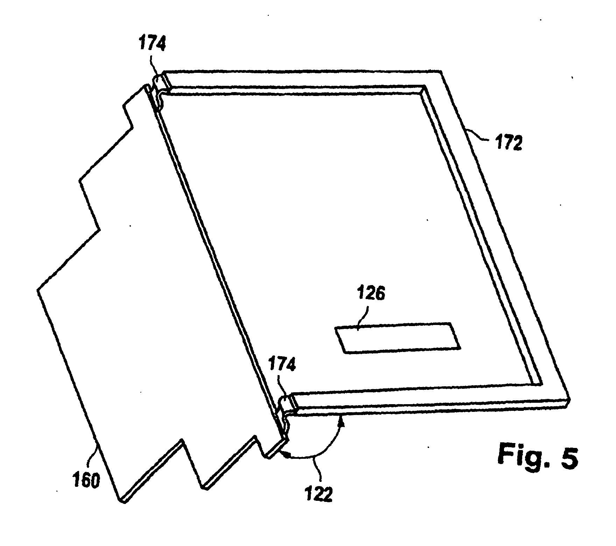

Die Auflageflächen 102 und 104 des RFID-Lesegeräts 100 schließen einen Winkel miteinander ein, der so gewählt ist, dass ein bequemes Auflegen des Dokuments 106 auf die Auflageflächen 102, 104 möglich ist, ohne den Einband des Dokuments 106 zu überdehnen. Beispielsweise kann der zwischen den Auflageflächen 102 und 104 eingeschlossene Winkel 122 (vgl. Figur 5) zwischen 10 und 170°, vorzugsweise ca. 75° betragen.

Unterhalb der Auflagefläche 102 ist eine Antenne 124 angeordnet. Hierbei handelt es sich um eine so genannte magnetische Antenne zum induktiven Auslesen des RFID-Chips 112 über ein Nahfeld. Die Antenne 124 kann spulenförmig ausgebildet sein. In der Ausführungsform gemäß Figur 1 besteht die Antenne 124 aus zwei Spulenwicklungen, die entlang der Berandung der Auflagefläche 102 verlaufen.

Die Auflagefläche 102 ist zumindest unterhalb des optisch lesbaren Bereichs 116 optisch transparent, so dass ein unter der Auflagefläche 102 angeordneter optischer Sensor 126 den optisch lesbaren Bereich 116 erfassen kann.

Unterhalb der Auflagefläche 104 des RFID-Lesegeräts 100 ist eine weitere Antenne 128 angeordnet. Wie die Antenne 124 ist auch die Antenne 128 bei der hier betrachteten Ausführungsform spulenförmig ausgebildet, wobei die beiden Spulenwicklungen entlang eines Randbereichs der Auflagefläche 104 verlaufen.

Das RFID-Lesegerät 100 hat eine elektronische Komponente 130, die auch als RFID-Reader bezeichnet wird. Die elektronische Komponente 130 beinhaltet einen Treiber 132 für die Antennen 124 und 128; dabei ist der Treiber 132 nur mit einer der Antennen 124 oder 128 galvanisch verbunden. Hier wird im Weiteren ohne Beschränkung der Allgemeinheit davon ausgegangen, dass der Treiber 132 mit der Antenne 124 galvanisch verbunden ist, um diese unmittelbar anzusteuern.

Die Antennen 124 und 128 sind so relativ zueinander angeordnet, dass diese induktiv gekoppelt sind. Vorzugsweise ist die Kopplung zwischen den Antennen 124 und 128 kritisch, aber lose. Beispielsweise beträgt die Kopplung k zwischen 0,05 und 0,2, vorzugsweise zwischen 0,1 und 0,15.

Der Treiber 132 kann also beide Antennen 124 und 128 ansteuern, wobei dies hinsichtlich der Antenne 124 unmittelbar durch eine galvanische Verbindung erfolgt und hinsichtlich der Antenne 128 mittelbar aufgrund der induktiven Kopplung der Antennen 124, 128. Entsprechendes gilt für den Empfang von Signalen von dem RFID-Chip 112, welche entweder unmittelbar über die Antenne 124 empfangen werden können oder mittelbar über die Antenne 128 aufgrund von deren induktiver Kopplung mit der Antenne 124.

Die elektronische Komponente 130 hat ferner einen Prozessor 134 zur Ausführung von Programminstruktionen 136. Die Programminstruktionen 136 dienen zur Steuerung der elektronischen Komponente 130 und insbesondere zur Ausführung eines kryptographischen Protokolls. Die elektronische Komponente 130 hat ferner einen elektronischen Speicher 138, beispielsweise zur temporären Speicherung von aus dem RFID-Chip 112 ausgelesenen Informationen.

Die elektronische Komponente 130 kann ferner eine Schnittstelle 140 aufweisen, wie zum Beispiel eine Chipkartenschnittstelle oder eine Netzwerkschnittstelle, zum Beispiel zur Nutzung eines geheimen kryptographischen Schlüssels. Beispielsweise ist die Nutzung des RFID-Lesegeräts 100 nur durch hierzu autorisiertes Personal möglich. Die Nutzungsberechtigung kann beispielsweise durch Einschieben einer entsprechenden Chipkarte in ein Chipkarten-Lesegerät der Schnittstelle 140 erfolgen.

Zum Auslesen von geschützten Informationen aus dem RFID-Chip 112, beispielsweise zur Durchführung einer Passkontrolle, wird wie folgt vorgegangen:

Das Dokument 106 wird aufgeschlagen und mit seiner Innenseite 114 auf die Auflagefläche 102 aufgelegt, wie in der Figur 1 dargestellt. Die verbleibenden Seiten des Dokuments 106, d.h. die Innenseiten 118, 120, ... und der hintere Einbanddeckel 110 befinden sich dann an der Auflagefläche 104.

Mit Hilfe des Sensors 126 erfasst die elektronische Komponente 130 zunächst die Kennung aus dem optisch lesbaren Bereich 116 des Dokuments 106. Nach Erfassung der Kennung steuert der Treiber 132 die Antennen 124 und 128 an, um Daten mit dem RFID-Chip 112 auszutauschen.

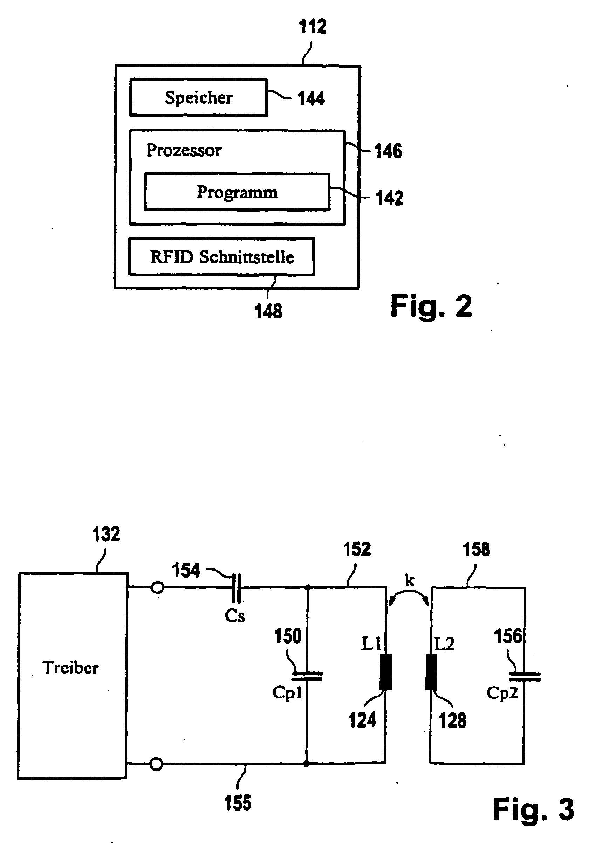

Durch Ausführung der Programminstruktionen 136 und entsprechender Programminstruktionen 142 (vgl. Figur 2) des RFID-Chips 112 wird ein kryptographisches Protokoll unter Verwendung der aus dem optisch lesbaren Bereich 116 erfassten Kennung durchgeführt. Nachdem das kryptographische Protokoll erfolgreich durch den RFID-Chip 112 und die elektronische Komponente 130 abgearbeitet worden ist, kann die elektronische Komponente 130 geschützte Informationen aus dem RFID-Chip 112 induktiv durch entsprechende Ansteuerung der Antennen 124 und 128 auslesen. Diese Informationen werden beispielsweise temporär in dem Speicher 138 abgelegt, insbesondere um sie auf einem Bildschirm anzuzeigen.

Die RFID-Kommunikation zwischen dem RFID-Chip 112 und der elektrischen Komponente 130 kann beispielsweise in einem Arbeitsfrequenzbereich von 100 KHz bis 30 MHz erfolgen. Wenn das Dokument 106 über keine Energieversorgung für den RFID-Chip 112 verfügt, was insbesondere bei elektronischen Reisedokumenten regelmäßig der Fall ist, so wird über die Antennen 124 bzw. 128 induktiv die für den Betrieb des RFID-Chips 112 erforderliche Energie eingekoppelt. Dies erfolgt bei einer ersten Frequenz. Die Übertragung der Daten zwischen dem RFID-Chip und der elektronischen Komponente 130 erfolgt bei einer zweiten Frequenz, auf die die Antennen 124 und 128 abgestimmt sind.

Vorzugsweise kommt ein so genanntes "Proximity Coupling" oder "Close Coupling" RFID-Verfahren zum Einsatz. Insbesondere kann der RFID-Chip 112 der ISO 14443 oder ISO 10536 entsprechen.

Beispielsweise erfolgt die Einkopplung der elektrischen Energie in den RFID-Chip 112 bei einer Frequenz von 13,56 MHz, wohingegen die Datenübertragung in einem Seitenband bei einer Frequenz von beispielsweise 14,3 MHz erfolgt.

Von besonderem Vorteil bei der in Figur 1 gezeigten Anordnung ist der RFID-Detektionsbereich innerhalb mehrerer Ebenen, die durch die Auflageflächen 102 und 104 sowie die darunter befindlichen Antennen 124 bzw. 128 definiert sind, und die sich aus dieser Antennenanordnung ergebende relativ homogene Feldverteilung.

Die Figur 2 zeigt ein schematisches Blockdiagramm einer Ausführungsform eines RFID-Chips 112. Der RFID-Chip 112 hat einen Speicher 144 zur Speicherung von sensitiver Information, wie zum Beispiel biometrischen Daten, insbesondere Fingerabdruck- und/oder Iris-Scann-Daten. Der RFID-Chip 112 hat ferner einen Prozessor 146 zur Ausführung von Programminstruktionen 142. Die Programminstruktionen 142 dienen insbesondere zur Ausführung der den RFID-Chip 112 betreffenden Schritte des kryptographischen Protokolls. Die RFID-Schnittstelle 148 des RFID-Chips 112 hat eine Antenne zum Einkoppeln elektrischer Energie und zur Datenübertragung von und zu der elektronischen Komponente 130 (vgl. Figur 1).

Die Figur 3 zeigt ein Prinzipschaltbild einer Ausführungsform der erfindungsgemäßen RFID-Antennenanordnung. Die Antenne 124 der Induktivität L1 bildet mit einem Kondensator 150 einer Kapazität Cp1 einen Antennenschwingkreis 152. Über einen zu dem Antennenschwingkreis 152 in Serie geschalteten Kondensator 154 einer Kapazität Cs und eine Leitung 155 ist der Antennenschwingkreis 152 mit dem Treiber 132 verbunden.

Die Antenne 182 einer Induktivität L2 bildet mit einem Kondensator 156 einer Kapazität Cp2 einen weiteren Antennenschwingkreis 158, der wie auch der Antennenschwingkreis 152 vorzugsweise als geschlossener Schwingkreis ausgebildet ist.

Die Antennen 124 und 128 sind so angeordnet, dass sie magnetisch, d.h. induktiv, gekoppelt sind, und zwar mit einer Kopplung k, die vorzugsweise kritisch, aber lose ist. Beispielsweise beträgt k zwischen 0,05 und 0,2, insbesondere zwischen 0,1 und 0,15.

Von besonderem Vorteil ist hier, dass die beiden Antennenschwingkreise 152 und 158 von demselben Treiber 132 angesteuert werden können, und zwar ohne dass ein Umschalten erforderlich ist. Dabei ermöglicht die induktive Kopplung der Schwingkreise 152 und 158 eine im Prinzip beliebige Ausrichtung der beiden Antennenschwingkreise 152 und 158 zueinander, sofern nur eine hinreichende Kopplung zwischen den Antennen 124 und 128 besteht. Je nach den verschiedenen Ausbildungen der zu lesenden Dokumente 106, insbesondere der verschiedenen in Frage kommenden Positionen der RFID-Chips, kann so das durch die Antennen 124 und 128 erzeugte magnetische Feld auch dreidimensional in verschiedenen Ebenen optimiert werden, so dass die RFID-Chips von allen relevanten Dokumentenarten gelesen werden können.

Die lose Kopplung der Antennenschwingkreise 152 und 158 hat verschiedene Vorteile:
- Wenn sich im Einflussbereich einer der Antennen 124 oder 128 ein Dokument mit einer Abschirmung, beispielsweise einer metallisierten Fläche, befindet, so bleibt die Funktionsfähigkeit der jeweils anderen Antenne für die RFID-Kommunikation mit dem RFID-Chip des betreffenden Dokuments erhalten.
- Da die Antenne 128 mit dem Kondensator 156 einen Schwingkreis bildet, ist das durch den Antennenschwingkreis 158 erzeugte Hochfrequenzfeld im Wesentlichen ebenso stark wie das durch den Antennenschwingkreis 152 erzeugte.

- Aufgrund der kritischen aber losen Kopplung der Antennen 124 und 128 werden auch Störungen, die eine der Antennen 124 bzw. 128 ausgesetzt ist, nur mit der Kopplung k zu der jeweils anderen Antenne übertragen.
- Aufgrund der Kopplung driften die Resonanzfrequenzen der beiden Antennenschwingkreise 152 und 158 auseinander, was ein gewünschter Effekt ist. Durch das Auseinanderdriften der Resonanzfrequenzen wird nämlich ein Seitenband für die Übertragung der Daten zwischen dem RFID-Chip und der elektronischen Komponente geschaffen. Der Resonanzverlauf der aus den gekoppelten Antennenschwingkreisen bestehenden Schaltung hat nämlich aufgrund der Kopplung eine so genannte Einsattlung, die die Seitenbänder definiert.

Vorzugsweise sind die Antennenschwingkreise 152 und 158 in ihrer Parallelresonanz der Antenne 124 mit dem Kondensator 150 bzw. der Antenne 128 mit dem Kondensator 156 in etwa auf die gleiche Impedanz abgestimmt.

Beispielsweise wird hierzu wie folgt vorgegangen: Zunächst wird der Antennenschwingkreis 158 realisiert. Der Antennenschwingkreis 158 wird auf die Resonanzfrequenz abgestimmt, die für die RFID-Datenübertragung vorgesehen ist. Vorzugsweise handelt es sich hierbei um eine Resonanzfrequenz in einem Seitenband, welches aus dem Auseinanderdriften der Resonanzfrequenzen aufgrund der Kopplung resultiert. Beispielsweise hat die Resonanz der Schwingkreise aufgrund der Kopplung eine Einsattelung bei etwa 13,56 MHz und ein Seitenband bei der Resonanzfrequenz von 14,3 MHz. Die Resonanzfrequenz im Bereich der Einsattelung kann für die Einkopplung von elektrischer Energie in den RFID-Chip verwendet werden, wohingegen die Resonanzfrequenz in dem Seitenband für die Informationsübertragung verwendet wird.

Die Abstimmung des Antennenschwingkreises 158 auf die Resonanzfrequenz in dem Seitenband für die Informationsübertragung erfolgt beispielsweise durch Einstellung des Kondensators 156.

Nach der Abstimmung des Antennenschwingkreises 158 wird der Antennenschwingkreis 152 realisiert. Der Antennenschwingkreis 152 wird auf dieselbe Resonanzfrequenz im Seitenband für die Informationsübertragung abgestimmt, wie der Antennenschwingkreis 158, wobei diese Abstimmung des Antennenschwingkreises 152 bei gleichzeitiger Kopplung des Antennenschwingkreises 158 erfolgt. Hier wird also die Schaltung bestehend aus den beiden gekoppelten Antennenschwingkreisen 152, 158 auf die Resonanzfrequenz abgestimmt.

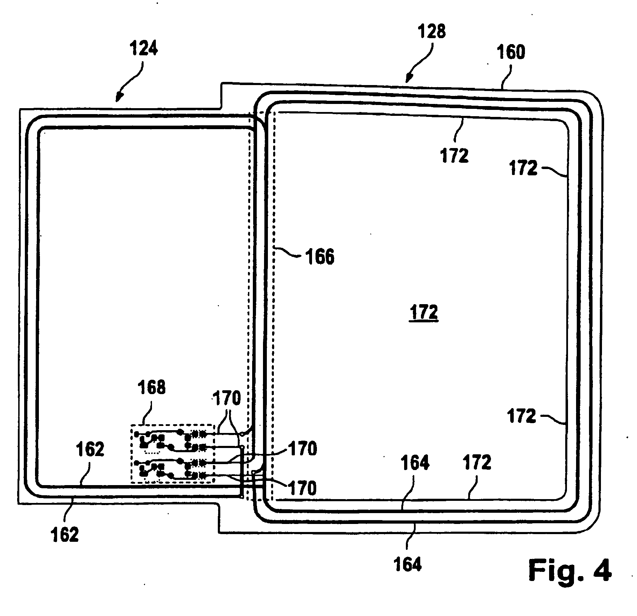

Die Figur 4 zeigt ein Substrat 160. Auf der Oberseite des Substrats 160 sind in einem Randbereich zwei Windungen 162 angeordnet, durch die die Antenne 124 realisiert wird. Auf der Unterseite des Substrats 160 sind Windungen 164 angeordnet, die ebenfalls in einem Randbereich verlaufen, und durch die die Antenne 128 realisiert wird. Die Windungen 162 und 164 verlaufen in einem mittleren Bereich 166 des Substrats 160, der in der Figur 4 mit gestrichelten Linien umrandet dargestellt ist, übereinander. Daraus resultiert eine magnetische Kopplung der Antennen 124 und 128.

Das Substrat 160 hat einen Bestückungsbereich 168, der in der Figur 4 ebenfalls mit gestrichelten Linien dargestellt ist. Dieser Bestückungsbereich 168 ist über Leiterbahnen 170 mit den Windungen 162 bzw. 164 verbindbar. Die Bestückung des Bestückungsbereichs 168 mit den Kondensatoren 150, 156 und 154 kann dabei so erfolgen, dass die in der Figur 3 gezeigte Schaltung resultiert. Alternativ kann die Bestückung auch so erfolgen, dass der Antennenschwingkreis 158 und nicht der Antennenschwingkreis 152 unmittelbar mit dem Treiber 132 verbunden wird.

Durch das Substrat 160 wird ein rahmenförmiger Bereich 172 gebildet, der eine Öffnung in dem Substrat 160 umfasst. Im Bereich dieser Öffnung kann der optische Sensor 126 (vgl. Figur 1 und Figur 5) angeordnet sein, um durch die Öffnung hindurch die Kennung des Dokuments 106 optisch zu erfassen.

Das Substrat 160 kann in einem oder mehreren Teilbereichen oder auch in Gänze flexibel ausgebildet sein. Beispielsweise ist der rahmenförmige Bereich 172 schwenkbar angeordnet, um ihn relativ zu dem Bereich des Substrats, auf dem die Windungen 162 angeordnet sind, in eine gewünschte Winkelposition zu schwenken, die durch die Position der Auflageflächen 102 und 104 (vgl. Figur 1) vorgegeben ist.

Die Figur 5 zeigt eine entsprechende Ausführungsform des Substrats 160 in einer Einbauposition. Das Substrat 160 hat zwei flexibel ausgebildete Bereiche 174, die ein Verschwenken des rahmenförmigen Bereichs 172 ermöglichen, um so den rahmenförmigen Bereich 172 in die gezeigte Einbauposition zu bringen, d.h. um den Winkel 122 einzustellen. Dies vereinfacht die Montage der Antennen 124 und 128 unterhalb der Auflageflächen 102 bzw. 104 (vgl. Figur 1).

Die Figur 6 zeigt eine perspektivische Darstellung einer Ausführungsform eines RFID-Lesegeräts 100. Das RFID-Lesegerät 100 hat einen schachtförmigen Aufnahmebereich 176 und einen im Wesentlichen horizontalen Auflagebereich 178 für ein Dokument 106. In dem schachtförmigen Aufnahmebereich 176 befindet sich die Auflagefläche 102 (Figur 1), die bei der Ausführungsform der Figur 6 also nicht in horizontaler Richtung, sondem schräg nach unten geneigt verläuft. Dagegen wird der Auflagebereich 178 durch die Auflagefläche 104 (vgl. Figur 1) gebildet, die hier im Wesentlichen in horizontaler Richtung verläuft. Das RFID-Lesegerät 100 hat einen Bildschirm 180 zur Anzeige der aus den RFID-Chip 112 des Dokuments ausgelesenen Information, die sich in dem Speicher 138 der elektronischen Komponente 130 befindet (vgl. die Ausführungsform der Figur 1).

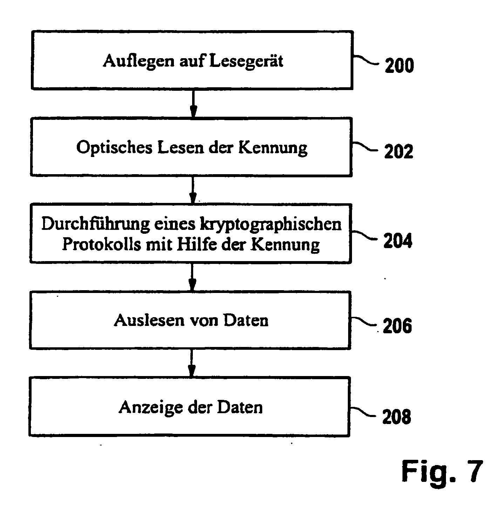

Die Figur 7 zeigt ein Flussdiagramm zur Darstellung einer möglichen Arbeitsweise des RFID-Lesegeräts 100. In dem Schritt 200 wird das Dokument aufgeschlagen und in seinem aufgeschlagenen Zustand auf das RFID-Lesegerät gelegt. Dies erfolgt so, dass der optisch lesbare Bereich des Dokuments 100 im Erfassungsbereich des optischen Sensors 126 des RFID-Lesegeräts 100 positioniert wird.

In dem Schritt 202 wird diese Kennung mit Hilfe des Sensors optisch erfasst. In dem Schritt 204 erfolgt der Austausch von Daten zwischen der elektronischen Komponente 130 des RFID-Lesegeräts 100 mit dem RFID-Chip 112 des Dokuments 106, um die Schritte eines kryptographischen Protokolls abzuarbeiten, wobei die optisch erfasste Kennung eingeht. Der Austausch dieser Daten erfolgt über die Resonanzfrequenz, auf die die Antennenschwingkreise 152 und 158 abgestimmt sind.

Nach erfolgreicher Durchführung des kryptographischen Protokolls kann die elektronische Komponente 130 in dem Schritt 206 die geschützten Informationen aus dem RFID-Chip 112 auslesen, so dass diese in diesem Schritt 208 angezeigt werden können.

### Bezugszeichenliste

- 100: RFID-Lesegerät
- 102: Auflagefläche
- 104: Auflagefläche
- 106: Dokument
- 108: vorderer Einbanddeckel
- 110: hinterer Einbanddeckel
- 112: RFID-Chip
- 114: Innenseite
- 116: optisch lesbarer Bereich
- 118: Innenseite
- 120: Innenseite
- 122: Winkel
- 124: Antenne
- 126: optischer Sensor
- 128: Antenne
- 130: elektronische Komponente
- 132: Treiber
- 134: Prozessor
- 136: Programminstruktionen
- 138: elektronischer Speicher
- 140: Schnittstelle
- 142: Programminstruktionen
- 144: Speicher
- 146: Prozessor
- 148: RFID-Schnittstelle
- 150: Kondensator
- 152: Antennenschwingkreis
- 154: Kondensator
- 155: Leitung
- 156: Kondensator
- 158: Antennenschwingkreis
- 160: Substrat
- 162: Windung
- 164: Windung
- 166: Bereich
- 168: Bestückungsbereich
- 170: Leiterbahn
- 172: rahmenförmiger Bereich
- 174: flexibel ausgebildeter Bereich
- 176: schachtförmiger Aufnahmebereich
- 178: Auflagebereich
- 180: Bildschirm

## Patentansprüche

1. RFID-Lesegerät (100) für ein Dokument (106) mit mindestens einem RFID-Chip (112), mit
- einer ersten Auflagefläche (102) für eine erste Seite (108, 114) des Dokuments und einer zweiten Auflagefläche (104) für eine zweite Seite (110, 118, 120,...) des Dokuments,
- einer ersten Antenne (124), die unterhalb der ersten Auflagefläche angeordnet ist, und einer zweiter Antenne (128), die unterhalb der zweiten Auflagefläche angeordnet ist,
wobei die ersten und zweiten Antennen jeweils zum induktiven Auslesen des zumindest einen RFID-Chips (112) über ein Nahfeld ausgebildet sind, wobei die erste Antenne zu einem ersten Antennenschwingkreis (152) gehört, **dadurch gekennzeichnet dass** die zweite Antenne zu einem zweiten Antennenschwingkreis (158) gehört, wobei die ersten und zweiten Antennenschwingkreise induktiv gekoppelt sind.

2. RFID-Lesegerät (100) nach Anspruch 1, wobei die ersten und zweiten Auflageflächen einen Winkel (122) einschließen, wobei der Winkel vorzugsweise zwischen 10 und 170° beträgt, vorzugsweise in etwa 75°.

3. RFID-Lesegerät (100) nach Anspruch 1 oder 2, mit Mitteln (132) zur Erregung des ersten Antennenschwingkreises durch ein Hochfrequenzsignal, so dass eine Erregung des zweiten Antennenschwingkreises durch die induktive Kopplung erfolgt, so dass sowohl der erste als auch der zweite Antennenschwingkreis zu dem induktiven Auslesen des zumindest einen RFID-Chips (112) über ein jeweiliges Nahfeld ausgebildet sind.

4. RFID-Lesegerät (100) nach einem der vorhergehenden Ansprüche, wobei die Kopplung zwischen den ersten und zweiten Antennenschwingkreisen zwischen 0,05 und 0,2, insbesondere zwischen 0,1 und 0,15 beträgt.

5. RFID-Lesegerät (100) nach einem der vorhergehenden Ansprüche, wobei der zweite Antennenschwingkreis auf eine Resonanzfrequenz abgestimmt ist, und wobei der mit dem zweiten Antennenschwingkreis gekoppelte erste Antennenschwingkreis auf dieselbe Resonanzfrequenz abgestimmt ist.

6. RFID-Lesegerät (100) nach einem der vorhergehenden Ansprüche, mit einem Treiber (132), wobei nur der erste Antennenschwingkreis mit dem Treiber galvanisch verbunden ist.

7. RFID-Lesegerät (100) nach einem der vorhergehenden Ansprüche, wobei die ersten und zweiten Antennenschwingkreise zum induktiven Auslesen des RFID-Chips (112) über das Nahfeld bei der Resonanzfrequenz ausgebildet sind.

8. RFID-Lesegerät (100) nach einem der vorhergehenden Ansprüche, mit einem Substrat (160) zur Aufnahme der ersten und zweiten Antennen, wobei das Substrat zumindest einen flexiblen Bereich (174) aufweist, der so biegbar ist, dass die ersten und zweiten Antennen in verschiedenen Ebenen liegen.

9. RFID-Lesegerät (100) nach Anspruch 8, wobei das Substrat einen ersten Bereich zur Anordnung unterhalb der ersten Auflagefläche und einen zweiten Bereich zur Anordnung unterhalb der zweiten Auflagefläche aufweist.

10. RFID-Lesegerät (100) nach einem der vorhergehenden Ansprüche, mit einem optischen Sensor (126) zum optischen Erfassen einer Kennung von dem Dokument.

11. RFID-Lesegerät (100) nach Anspruch 10, mit Mitteln (134, 136) zum Ausführen eines kryptographischen Protokolls mit Hilfe der optisch erfassten Kennung als Voraussetzung für das Auslesen einer geschützten Information aus dem RFID-Chip (112).

12. RFID-Lesegerät (100) nach Anspruch 10 oder 11, mit einem Substrat (160) zur Aufnahme der ersten und zweiten Antennen, und mit einem optischen Sensor (126), der hinter einer Öffnung des Substrats angeordnet ist.

13. RFID-Lesegerät (100) nach einem der vorhergehenden Ansprüche, wobei die ersten und zweiten Auflageflächen einen von 180 Grad abweichenden Winkel einschließen.

14. RFID-Lesegerät (100) nach einem der vorhergehenden Ansprüche, wobei der zweite Antennenschwingkreis als geschlossener Schwingkreis ausgebildet ist.

15. Verfahren zur Abstimmung von ersten und zweiten Antennenschwingkreisen (152, 158) eines RFID-Lesegeräts (100) nach Anspruch 1, wobei der erste Antennenschwingkreis eine erste Spule (124) und der zweite Antennenschwingkreis eine zweite Spule (128) aufweist, die induktiv miteinander gekoppelt sind, mit folgenden Schritten:
- Abstimmung des zweiten Antennenschwingkreises auf eine Resonanzfrequenz bei geöffnetem ersten Antennenschwingkreis,
- Abstimmung des ersten Antennenschwingkreises auf dieselbe Resonanzfrequenz bei induktiver Kopplung mit dem zweiten Antennenschwingkreis,
- Anschluss des ersten Antennenschwingkreises an einen Treiber des RFID-Lesegeräts (100).

## Claims

1. RFID reader (100) for a document (106) with at least one RFID chip (112), having
- a first contact face (102) for a first page (108, 114) of the document and a second contact face (104) for a second page (110, 118, 120, ...) of the document,
- a first antenna (124), which is arranged below the first contact face, and a second antenna (128), which is arranged below the second contact face,
wherein the first and second antennas are respectively designed to inductively read the at least one RFID chip (112) by means of a near field, wherein the first antenna is part of a first antenna resonant circuit (152), **characterized in that** the second antenna is part of a second antenna resonant circuit (158), the first and second antenna resonant circuits being inductively coupled.

2. RFID reader (100) according to Claim 1, wherein the first and second contact faces form an angle (122), said angle preferably being between 10 and 170°, preferably approximately 75°.

3. RFID reader (100) according to Claim 1 or 2, having means (132) for exciting the first antenna resonant circuit by means of a radio-frequency signal, so that the second antenna resonant circuit is excited by the inductive coupling, so that both the first and the second antenna resonant circuit are designed to inductively read the at least one RFID chip (112) by means of a respective near field.

4. RFID reader (100) according to one of the preceding claims, wherein the coupling between the first and second antenna resonant circuits is between 0.05 and 0.2, particularly between 0.1 and 0.15.

5. RFID reader (100) according to one of the preceding claims, wherein the second antenna resonant circuit is tuned to a resonant frequency, and wherein the first antenna resonant circuit, which is coupled to the second antenna resonant circuit, is tuned to the same resonant frequency.

6. RFID reader (100) according to one of the preceding claims, having a driver (132), wherein only the first antenna resonant circuit is DC-connected to the driver.

7. RFID reader (100) according to one of the preceding claims, wherein the first and second antenna resonant circuits are designed to inductively read the RFID chip (112) by means of the near field at the resonant frequency.

8. RFID reader (100) according to one of the preceding claims, having a substrate (160) for holding the first and second antennas, wherein the substrate has at least one flexible region (174) which can be bent such that the first and second antennas are situated in different planes.

9. RFID reader (100) according to Claim 8, wherein the substrate has a first region for arrangement below the first contact face and a second region for arrangement below the second contact face.

10. RFID reader (100) according to one of the preceding claims, having an optical sensor (126) for optically sensing an identifier of the document.

11. RFID reader (100) according to Claim 10, having means (134, 136) for executing a cryptographic protocol using the optically sensed identifier as a prerequisite for reading a protected information item from the RFID chip (112).

12. RFID reader (100) according to Claim 10 or 11, having a substrate (160) for holding the first and second antennas, and having an optical sensor (126) which is arranged behind an opening in the substrate.

13. RFID reader (100) according to one of the preceding claims, wherein the first and second contact faces form an angle which differs from 180°.

14. RFID reader (100) according to one of the preceding claims, wherein the second antenna resonant circuit is in the form of a closed resonant circuit.

15. Method for tuning first and second antenna resonant circuits (152, 158) of an RFID reader (100) according to Claim 1, wherein the first antenna resonant circuit has a first coil (124) and the second antenna resonant circuit has a second coil (128) which are inductively coupled to one another, having the following steps:
- the second antenna resonant circuit is tuned to a resonant frequency when the first antenna resonant circuit is open,
- the first antenna resonant circuit is tuned to the same resonant frequency when inductively coupled to the second antenna resonant circuit,
- the first antenna resonant circuit is connected to a driver of the RFID reader (110).

## Revendications

1. Lecteur de RFID (100) pour un document (106) muni d'au moins une puce RFID (112), comprenant :
- une première surface d'application (102) pour un premier côté (108, 114) du document et une deuxième surface d'application (104) pour un deuxième côté (110, 118, 120, ...) du document,
- une première antenne (124) qui est disposée sous la première surface d'application et une deuxième antenne (128) qui est disposée sous la deuxième surface d'application,
la première et la deuxième antenne étant respectivement configurées pour la lecture inductive de l'au moins une puce RFID (112) par le biais d'un champ de proximité, la première antenne faisant partie d'un premier circuit oscillant d'antenne (152), **caractérisé en ce que** la deuxième antenne fait partie d'un deuxième circuit oscillant d'antenne (158), les premier et deuxième circuits oscillants d'antenne étant couplés de manière inductive.

2. Lecteur de RFID (100) selon la revendication 1, les première et deuxième surfaces d'application incluant en angle (122), l'angle étant de préférence compris entre 10 et 170°, de préférence égal à environ 75°.

3. Lecteur de RFID (100) selon la revendication 1 ou 2, comprenant des moyens (132) pour exciter le premier circuit oscillant d'antenne par un signal à haute fréquence afin qu'une excitation du deuxième circuit oscillant d'antenne ait lieu par le biais du couplage inductif, de sorte que le premier ainsi que le deuxième circuit oscillant d'antenne sont tous deux configurés pour la lecture inductive de l'au moins une puce RFID (112) par le biais d'un champ de proximité correspondant.

4. Lecteur de RFID (100) selon l'une des revendications précédentes, le couplage entre les premier et deuxième circuits oscillants d'antenne étant compris entre 0,05 et 0,2, notamment entre 0,1 et 0,15.

5. Lecteur de RFID (100) selon l'une des revendications précédentes, le deuxième circuit oscillant d'antenne étant accordé à une fréquence de résonance et le premier circuit oscillant d'antenne couplé avec le deuxième circuit oscillant d'antenne étant accordé à la même fréquence de résonance.

6. Lecteur de RFID (100) selon l'une des revendications précédentes, comprenant un circuit d'attaque (132), seul le premier circuit oscillant d'antenne étant relié galvaniquement au circuit d'attaque.

7. Lecteur de RFID (100) selon l'une des revendications précédentes, les premier et deuxième circuits oscillants d'antenne étant configurés pour la lecture inductive de la puce RFID (112) par le biais du champ de proximité à la fréquence de résonance.

8. Lecteur de RFID (100) selon l'une des revendications précédentes, comprenant un substrat (160) pour accueillir la première et la deuxième antenne, le substrat présentant au moins une zone flexible (174) qui peut être fléchie de telle sorte que les première et deuxième antennes se trouvent dans des plans différents.

9. Lecteur de RFID (100) selon la revendication 8, le substrat présentant une première zone destinée à être disposée sous la première surface d'application et une deuxième zone destinée à être disposée sous la deuxième surface d'application.

10. Lecteur de RFID (100) selon l'une des revendications précédentes, comprenant un capteur optique (126) pour la détection optique d'un identifiant du document.

11. Lecteur de RFID (100) selon la revendication 10, comprenant des moyens (134, 136) pour exécuter un protocole cryptographique à l'aide de l'identifiant détecté de manière optique en tant que condition préalable à la lecture d'une information protégé depuis la puce RFID (112).

12. Lecteur de RFID (100) selon la revendication 10 ou 11, comprenant un substrat (160) pour accueillir les première et deuxième antennes et comprenant un capteur optique (126) qui est disposé derrière une ouverture du substrat.

13. Lecteur de RFID (100) selon l'une des revendications précédentes, les première et deuxième surfaces d'application incluant un angle différent de 180 degrés.

14. Lecteur de RFID (100) selon l'une des revendications précédentes, le deuxième circuit oscillant d'antenne étant réalisé sous la forme d'un circuit oscillant fermé.

15. Procédé pour accorder un premier et un deuxième circuit oscillant d'antenne (152, 158) d'un lecteur de RFID (100) selon la revendication 1, le premier circuit oscillant d'antenne présentant une première bobine (124) et le deuxième circuit oscillant d'antenne une deuxième bobine (128) qui sont couplées entre elles de manière inductive, comprenant les étapes suivantes :
- accord du deuxième circuit oscillant d'antenne à une fréquence de résonance lorsque le premier circuit oscillant d'antenne est ouvert,
- accord du premier circuit oscillant d'antenne à la même fréquence de résonance lors du couplage inductif avec le deuxième circuit oscillant d'antenne,
- raccordement du premier circuit oscillant d'antenne à un circuit d'attaque du lecteur de RFID (110).
